# EUROPÄISCHE PATENTSCHRIFT

(11) **EP 0 609 681 B1**
(45) Veröffentlichungstag und Bekanntmachung des Hinweises auf die Patenterteilung: **26.03.1997**
(21) Anmeldenummer: 94100484.8
(22) Anmeldetag: 14.01.1994
(51) Int. Cl.: B23B 39/16, B23Q 3/155, B27C 3/04

(54) **Bohrmaschine**
Drilling machine
Perçeuse

(30) Priorität: 01.02.1993 AT 157/93
(43) Veröffentlichungstag der Anmeldung: 10.08.1994
(73) Patentinhaber: Julius Blum Gesellschaft m.b.H., A-6973 Höchst (AT)
(72) Erfinder: Fessler, Bernhard, A-6923 Lauterach (AT)
(74) Vertreter: Torggler, Paul, Dr.

(56) Entgegenhaltungen:
- EP-A- 0 430 228
- DE-C- 4 129 743
- DE-U- 9 211 359
- GB-A- 2 031 777
- US-A- 3 797 363

## Beschreibung

Die Erfindung bezieht sich auf eine Bohrmaschine zum Bohren von Löchern in Möbelteile, insbesondere zum Bohren der Befestigungslöcher für Möbelbeschläge, beispielsweise Scharniere mit einem Antriebsmotor, der über einen austauschbaren Mehrspindelbohrkopf mit Bohrergetriebe und mehreren Bohrspindeln mehrere Bohrer antreibt und einem Anschlaglineal mit verstellbaren Anschlagklötzen, sowie einer Vorschubeinrichtung für den Bohrvorschub, einem Tischrahmen und gegebenenfalls einem Einpreßstempel zum Montieren der Möbelbeschläge an einem Möbelteil.

Im modernen Möbelbau sind außer aufwendigen Bohrautomaten, mit denen komplette Bohrbilder in eine Möbelwand oder eine Tür in einem einzigen Arbeitsgang gebohrt werden können, auch Bohrmaschinen bekannt, mittels denen nur eine Bohrreihe oder die Löcher für ein Scharnier in einem Arbeitsgang gebohrt werden können, worauf für eine weitere Bohrung umgerüstet werden muß. Derartige Bohrmaschinen werden sowohl in Industriebetrieben als auch von gewerblichen Handwerksbetrieben verwendet. Auch diese Bohrmaschinen weisen mehrere Bohrspindeln auf und so können damit beispielsweise mehrere Löcher im 32 mm-Raster oder zwei kleine Löcher und ein großes Loch, wie sie für die Montage bei Scharniertöpfen benötigt werden, gleichzeitig gebohrt werden.

In letzter Zeit werden vielfach Bohrmaschinen verwendet, die mit einem Einpreßstempel versehen sind. Mit einer derartigen Bohrmaschine können sowohl die Befestigungslöcher gebohrt werden als auch der Beschlagteil, beispielsweise ein Scharnier, in den Möbelteil eingesetzt werden. Der Einpreßstempel wird dabei mittels der Hydraulik oder Pneumatik für den Bohrvorschub oder händisch beaufschlagt.

Die DE-C-41 29 743, die dem Oberbegriff des Patentanspruchs 1 entspricht, zeigt eine Bohrmaschine mit einem Mehrspindelbohrkopf und einer Anschlagwalze, die mehrere Anschlaglineale trägt. Durch Drehen der Anschlagwalze kann jeweils ein Anschlaglineal in die Arbeitsstellung gebracht werden. Die Bohrmaschine weist einen Mehrspindelbohrkopf auf, wobei sich während des Bohrens jeweils eine Bohrspindlung in der Arbeitsstellung befindet. Ein Austausch des Mehrspindelbohrkopfes im normalen Arbeitsbetrieb ist nicht vorgesehen.

Aufgabe der Erfindung ist es, eine Bohrmaschine der eingangs erwähnten Art dahingehend zu verbessern, daß sie schneller und einfacher als bekannte Bohrmaschinen umrüstbar ist.

Dies wird erfindungsgemäß durch einen Satz, bestehend aus mehreren austauschbaren Mehrspindelbohrköpfe, die sich gleichzeitig in der Arbeitsstellung befinden, und einen korrespondierenden Satz austauschbarer Anschlaglineale, die mittels vorzugsweise werkzeuglos betätigbarer Schnellspanneinrichtungen an der Bohrmaschine auswechselbar fixierbar sind erreicht.

Mit einer erfindungsgemäßen Bohrmaschine muß der Tischler nicht jedes Mal, wenn er ein anderes Bohrbild bohren möchte, die Anschläge auf dem Anschlaglineal neu einstellen und den Mehrspindelbohrkopf mit Bohrer neu bestücken. Wenn der Beschlag gleich eingepreßt werden soll, ist die entsprechende Matrize vorgerüstet. Mit der erfindungsgemäßen Bohrmaschine hat der Tischler mehrere bestückte Mehrspindelbohrköpfe zur Verfügung, die entsprechend einem gängigen Bohrbild ausgerüstet sind und das jeweils dazupassende Anschlaglineal. Die Anzahl der Mehrspindelbohrköpfe und der bestückten Anschlaglineale wird sich nach der Größe des Betriebes und nach den verschiedenen mit einer gewissen Regelmäßigkeit wiederkehrenden Bohrbildern richten.

Will ein Tischler beispielsweise die Bohrlöcher für Scharniertöpfe in Möbeltüren bohren und dann die Befestigungslöcher für Grundplatten in mehreren Möbelseitenwänden, so wird er zuerst die Bohrmaschine mit einem Mehrspindelbohrkopf und einem Anschlaglineal bestücken, die entsprechend dem Bohrbild der Scharniertöpfe ausge rüstet sind und gegebenenfalls eine Einpreßmatrize aufweisen. Nachdem er seine Kleinserie an Türen gebohrt hat, wird er die Mehrspindelbohrköpfe und die Anschlaglineale gegen solche, die dem Bohrbild der Grundplattenbefestigung entsprechen, austauschen. Dadurch bleibt das am Mehrspindelbohrkopf und am Anschlaglineal für die türseitigen Dübellochbohrungen eingestellte Bohrbild erhalten und steht für einen weiteren Arbeitsgang zur Verfügung.

Das Umrüsten der Bohrmaschine wird noch dadurch erleichtert, daß mindestens ein Teil der Mehrspindelbohrköpfe eine separate Antriebswelle aufweist, die sich neben der oder den Bohrspindeln befindet. Dadurch kann auch bei stark unterschiedlichen Bohrbildern, beispielsweise wenn von einem Kantenabstand von 22,5 mm für einen Scharniertopf auf einen Kantenabstand von 37 mm für eine Lochreihe übergegangen wird, sowohl in beiden Richtungen des Anschlaglineales als auch beim Abstand x zum Anschlaglineal von der gleichen 0-Linie ausgegangen werden. Die Tiefeneinstallung zum Anschlaglineal kann durch einen Revolveranschlag weiter erleichtert werden.

Nachfolgend wird ein Ausführungsbeispiel der Erfindung anhand der Figuren der beiliegenden Zeichnungen eingehend beschrieben.

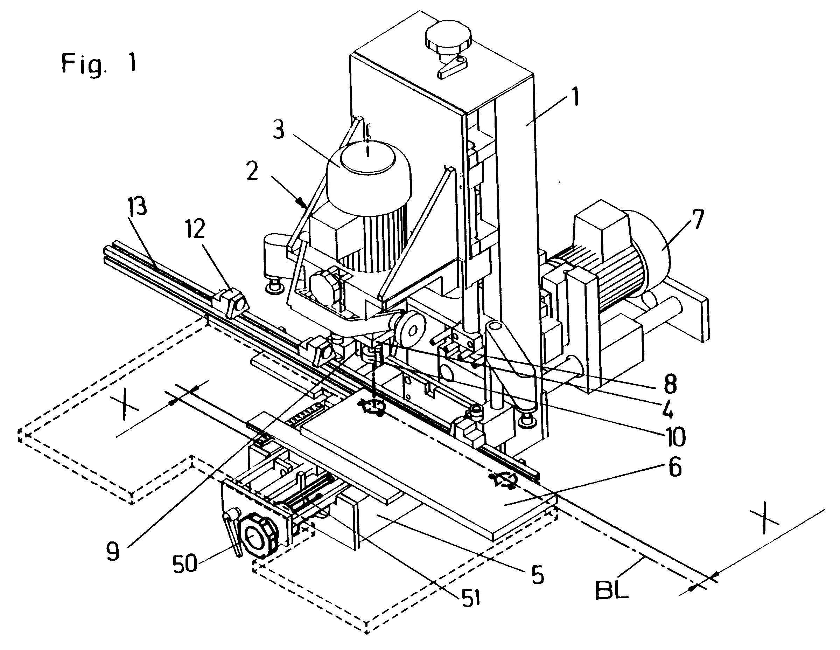

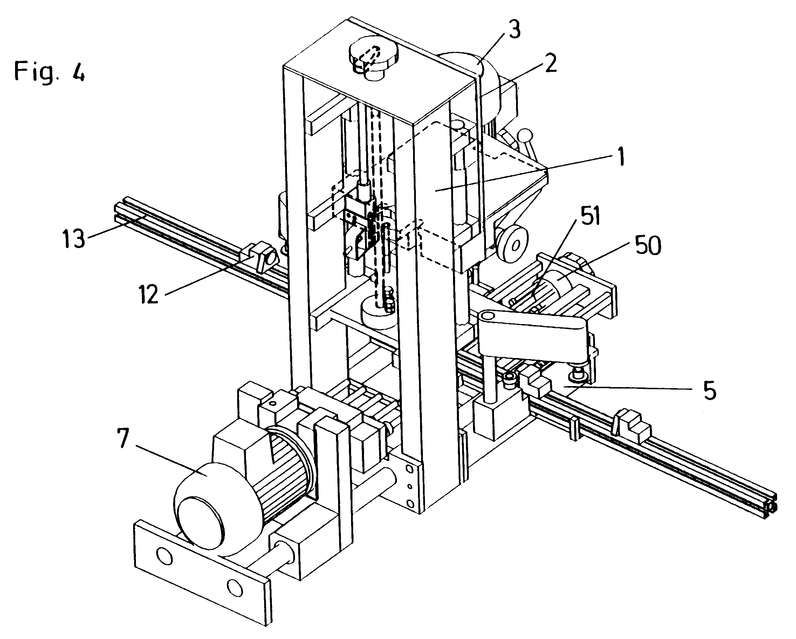

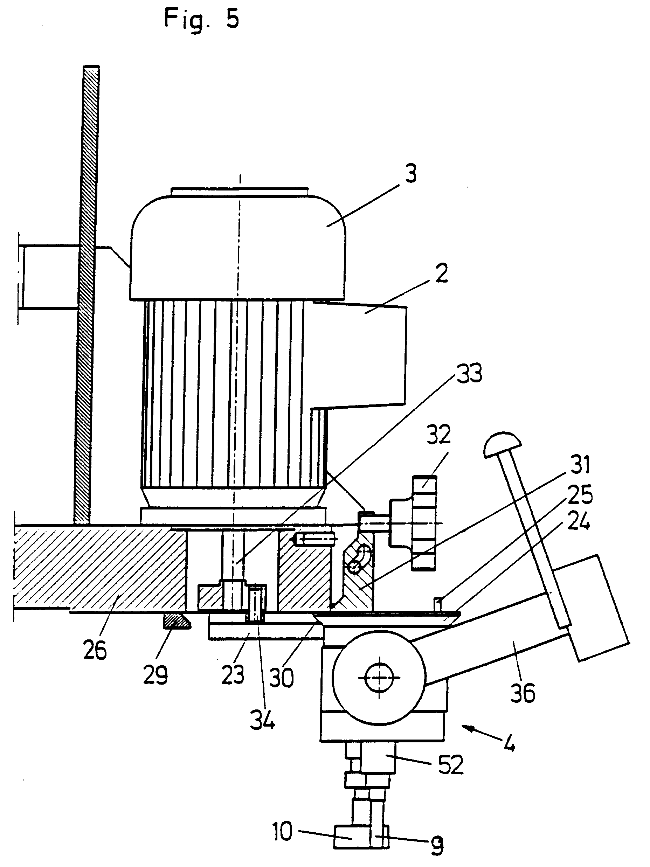

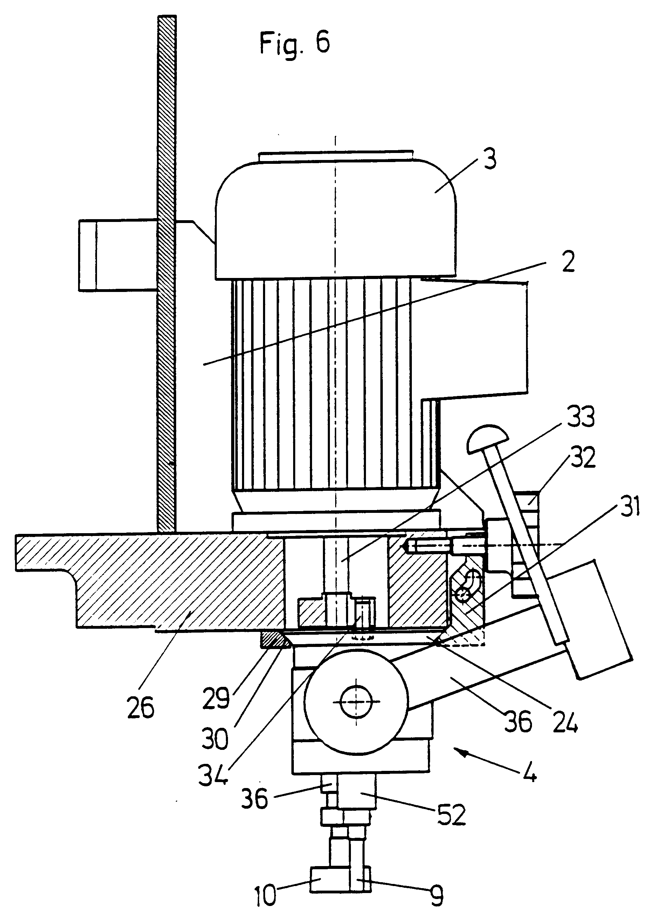

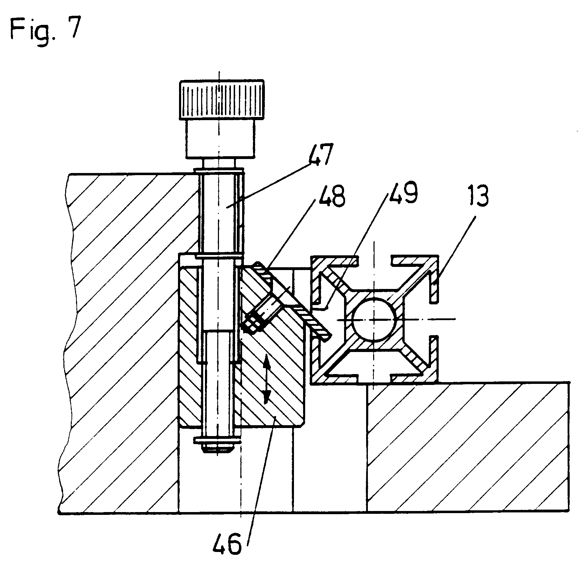

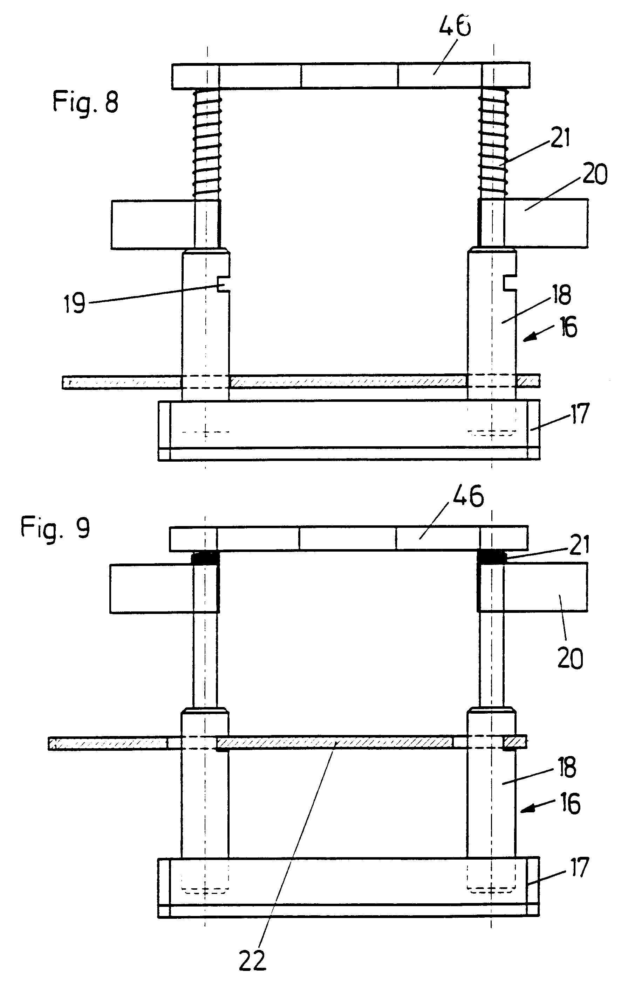

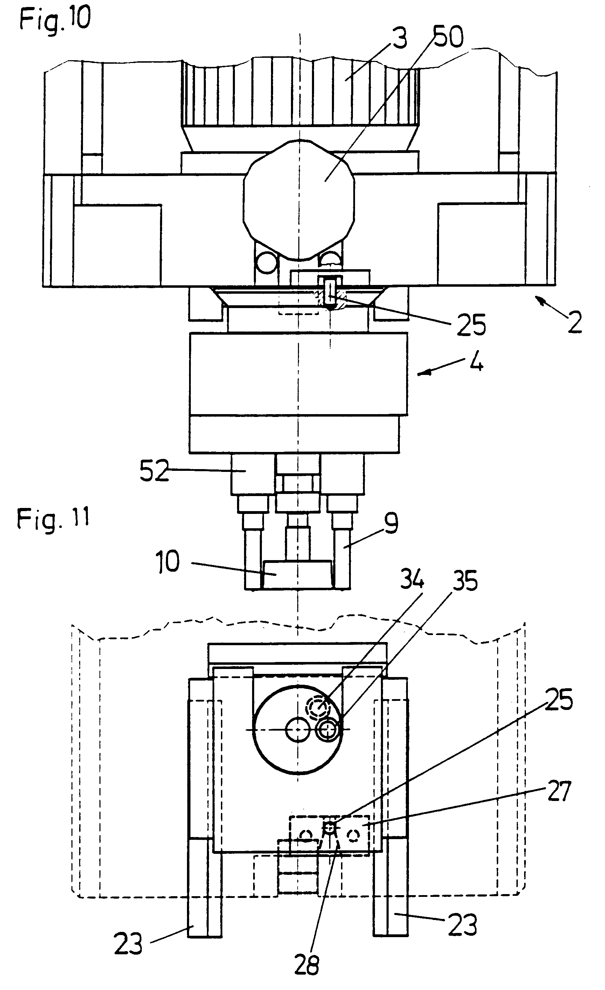

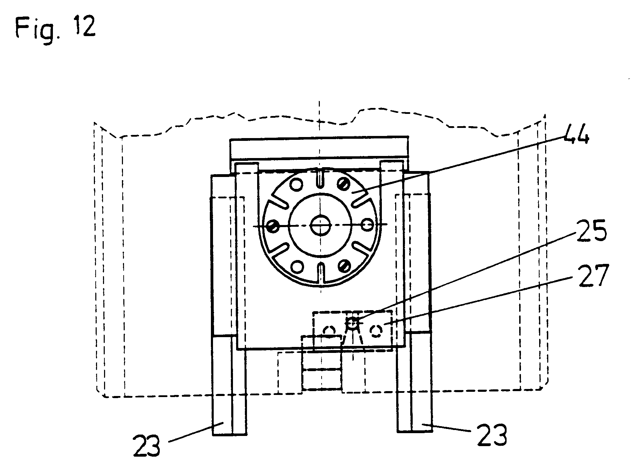

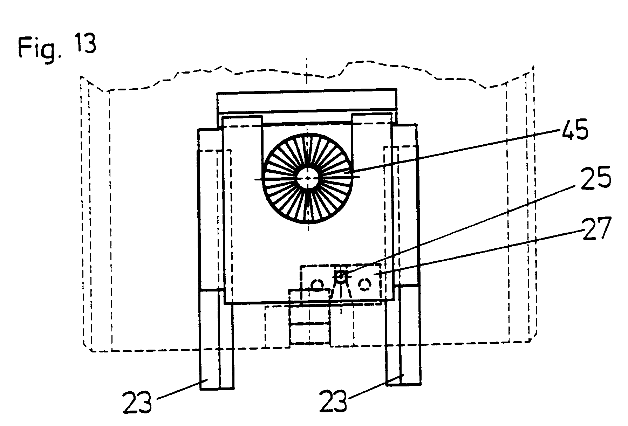

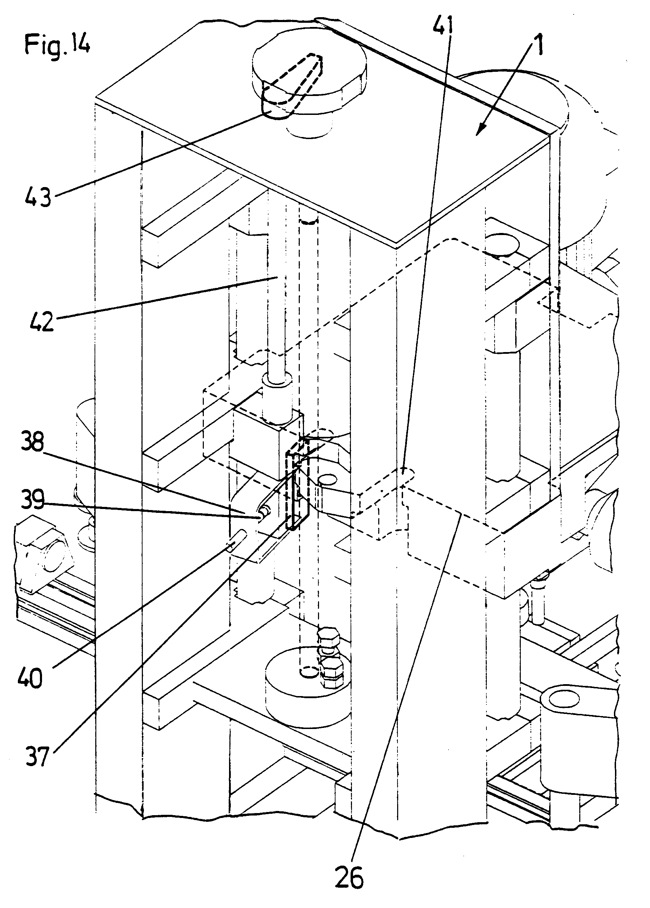

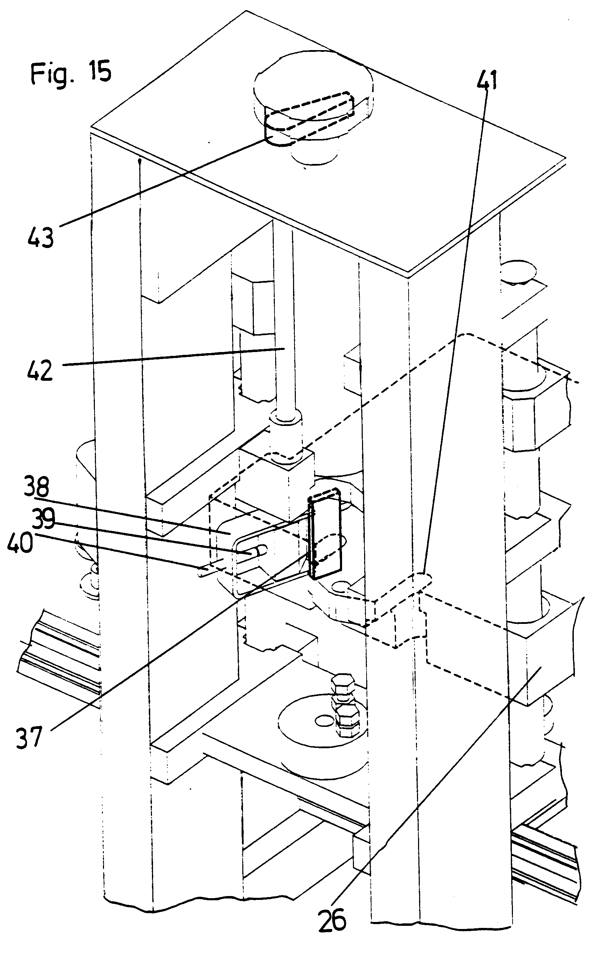

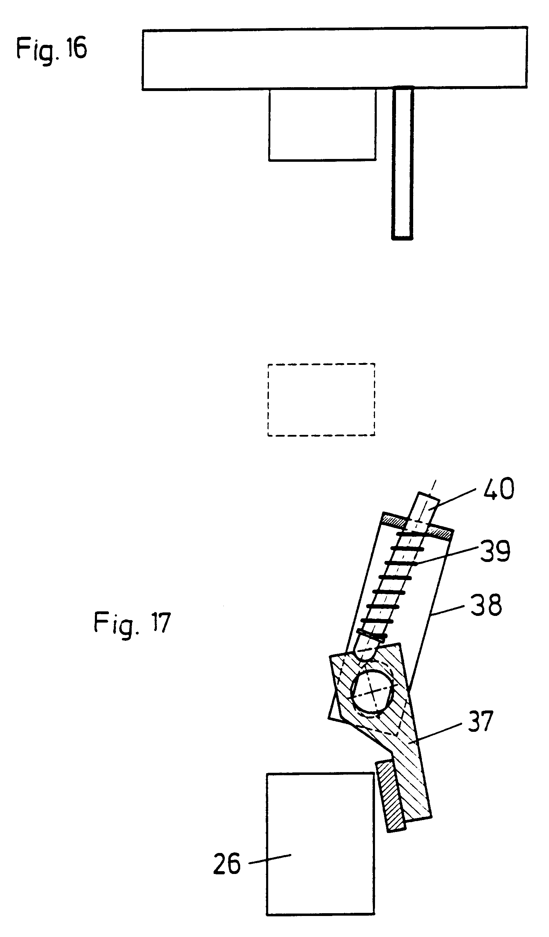

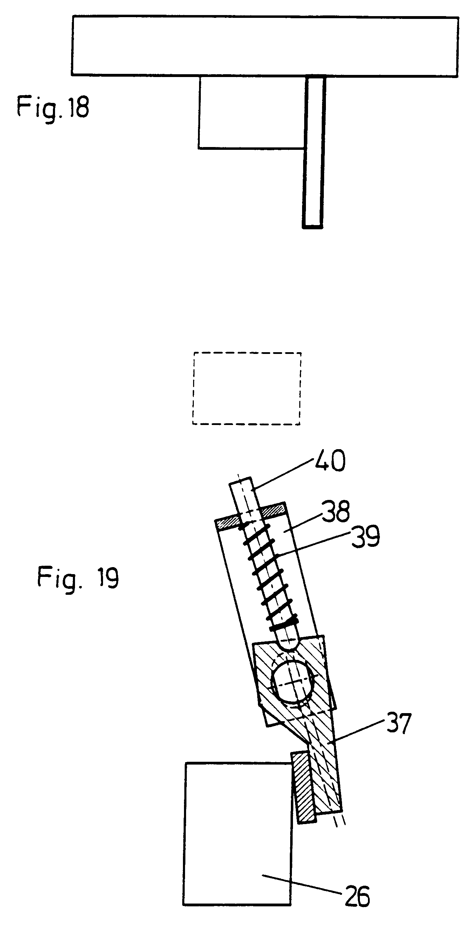

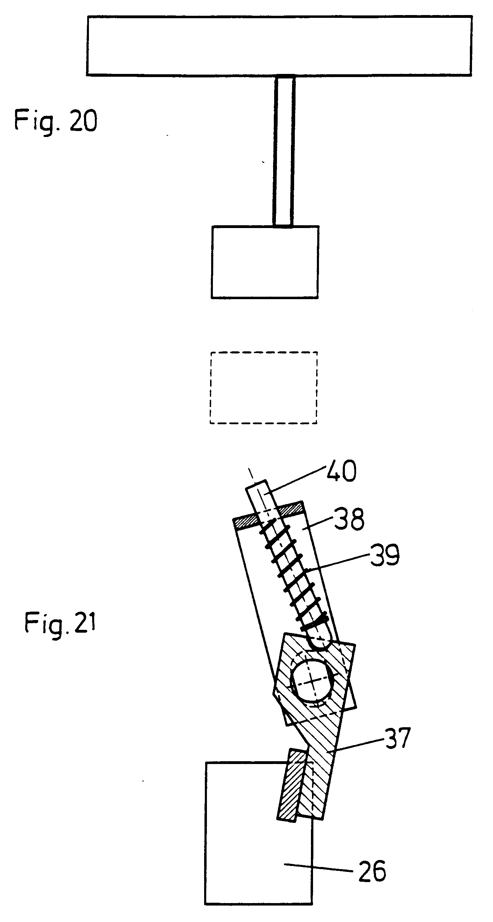

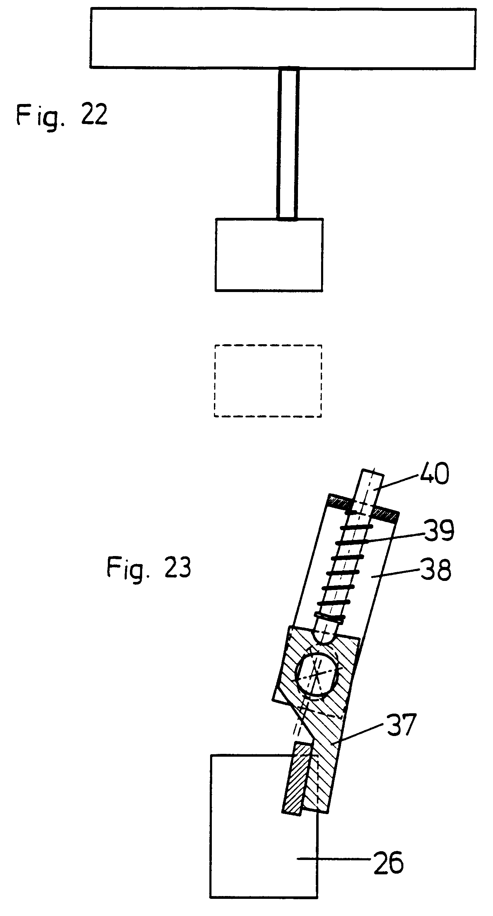

Die Fig. 1 bis 3 zeigen jeweils ein Schaubild einer erfindungsgemäßen Bohrmaschine von vorne gesehen; die Fig. 4 zeigt ein Schaubild einer erfindungsgemäßen Bohrmaschine von hinten gesehen; die Fig. 5 zeigt eine Seitenansicht des Antriebsmotors und des Mehrspindelbohrkopfes, wobei der Mehrspindelbohrkopf in seine Verankerung an der Bohrmaschine eingeschoben wird; die Fig. 6 zeigt eine gleiche Seitenansicht mit verankertem Mehrspindelbohrkopf; die Fig. 7 zeigt einen Vertikalschnitt durch ein Anschlaglineal und durch einen Befestigungsklotz für das Anschlaglineal; die Fig. 8 zeigt eine Stirnansicht eines Niederhalters für stirnseitiges Bohren, wobei der Niederhalter jedoch in der außer-Eingriffstellung ist; die Fig. 9 zeigt eine Stirnansicht des Niederhalters in der Eingriffstellung; die Fig. 10 zeigt eine Vorderansicht des Mehrspindelbohrkopfes und der Bohrmaschine, wobei der Kupplungsbereich zwischen dem Antriebsmotor und dem Bohrgetriebe geschnitten gezeichnet ist; die Fig. 11 zeigt eine Draufsicht auf die Kupplung; die Fig. 12 und 13 zeigen jeweils eine Draufsicht auf eine weitere Variante einer Kupplung; die Fig. 14 zeigt ein Schaubild der Bohrmaschine von hinten gesehen im Bereich des Wegbegrenzers für den Rückzug der Bohrmaschine, wobei der Wegbegrenzer in der außer-Eingriffstellung ist; die Fig. 15 zeigt die gleiche Ansicht wie die Fig. 14 mit in Eingriff gebrachtem Wegbegrenzer; die Fig. 16 zeigt schematisch die außer-Eingriffstellung des Wegbegrenzers; die Fig. 17 zeigt einen Schnitt durch den Wegbegrenzer in der außer-Eingriffstellung; die Fig. 18 zeigt schematisch die Stellung des Wegbegrenzers nach dem Umschalten zur Eingriffstellung, aber bevor der Wegbegrenzer in die Eingriffstellung geschwenkt ist; die Fig. 19 zeigt einen Schnitt durch den Wegbegrenzer in dieser Stellung; die Fig. 20 zeigt schematisch die Stellung des Wegbegrenzers in der in-Eingriffstellung; die Fig. 21 zeigt einen Horizontalschnitt durch den Wegbegrenzer in dieser Stellung; die Fig. 22 zeigt schematisch die Stellung des Wegbegrenzers, wenn sich dieser in der Eingriffstellung befindet und die Fig. 23 zeigt einen Schnitt durch den Wegbegrenzer, wobei der Wegbegrenzer noch in der in-Eingriffstellung ist, der in tragende Bügel jedoch in die außer-Eingriffstellung geschwenkt wurde.

Die erfindungsgemäße Bohrmaschine weist einen Rahmen 1 auf, auf dem ein Vorschubrahmen 2 senk- und hebbar gelagert ist. Der Vorschubrahmen 2 trägt den Antriebsmotor 3 für flachseitiges Bohren. Weiters ist am Vorschubrahmen 2 der jeweilige Mehrspindelbohrkopf 4 mit den Bohrspindeln 52 lösbar befestigt. Am Rahmen 1 ist weiters ein Auflagegestell 5 für das Werkstück 6 befestigt.

Weiter trägt der Rahmen einen Antriebsmotor 7 und einen Mehrspindelbohrbalken 8 für das stirnseitige Bohren.

Im Ausführungsbeispiel nach der Fig. 1 ist der Mehrspindelbohrkopf 4 mit den Bohrern 9, 10 für das Bohren der Befestigungslöcher für einen Scharniertopf bestückt. Der Mehrspindelbohrkopf 4 trägt einen Bohrer 10 mit großen Durchmesser, der das Loch für den Scharniertopf bohrt und zwei kleine Bohrer 9, die die Löcher für die Dübelzapfen bohren.

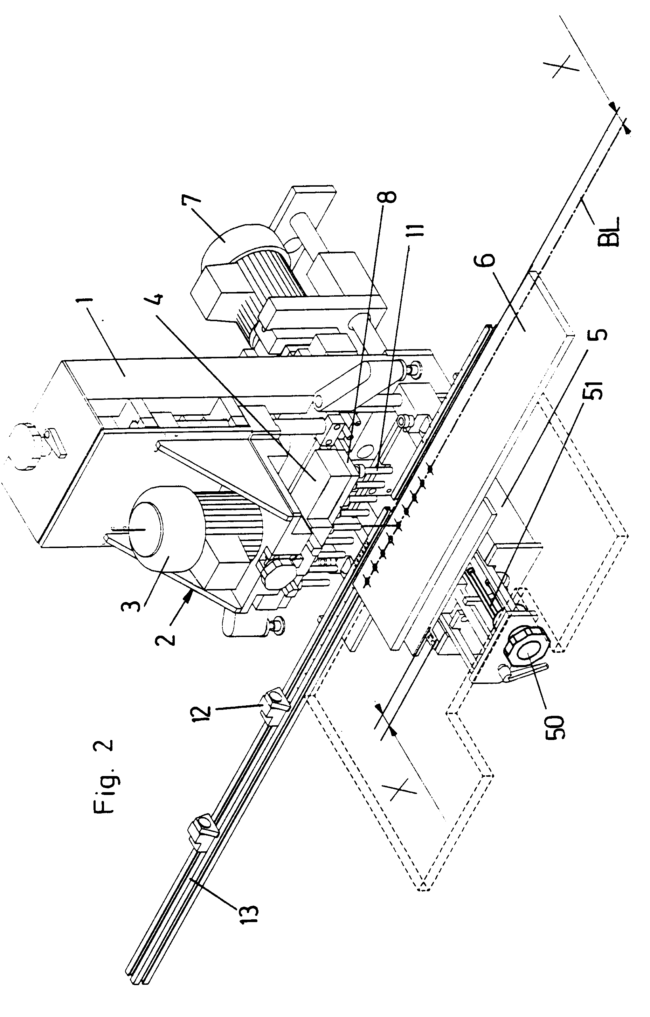

Im Ausführungsbeispiel nach der Fig. 2 ist der Mehrspindelbohrkopf mit mehreren Bohrern 11 für das Bohren einer Lochreihe bestückt. Um vom Bohrbild der Fig. 1 auf das Bohrbild der Fig. 2 zu kommen, werden nicht die Bohrer in den Mehrspindelbohrköpfen 4 ausgetauscht und die Position der Anschlagklötze 12 auf den Anschlaglinealen 13 verändert, sondern es werden jeweils die Mehrspindelbohrköpfe 4 und die Anschlaglineale 13 ausgetauscht, wobei diese für das jeweilige Bohrbild gerüstet bleiben.

Damit bei sämtlichen Bohrbildern sowohl in der Richtung entlang dem Anschlaglineal 13 als auch in der Richtung zum Anschlaglineal beim Einstellen eines gewünschten Bohrerkantenabstandes x immer von der gleichen 0-Linie ausgegangen werden kann, ist vorgesehen, daß mindestens ein Teil der Mehrspindelbohrköpfe 4 eine separate Antriebswelle aufweist, die sich neben den Bohrspindeln 52 befindet. In manchen Fällen kann die Antriebswelle sich im gleichen Abstand von benachbarten Bohrspindeln 52 befinden.

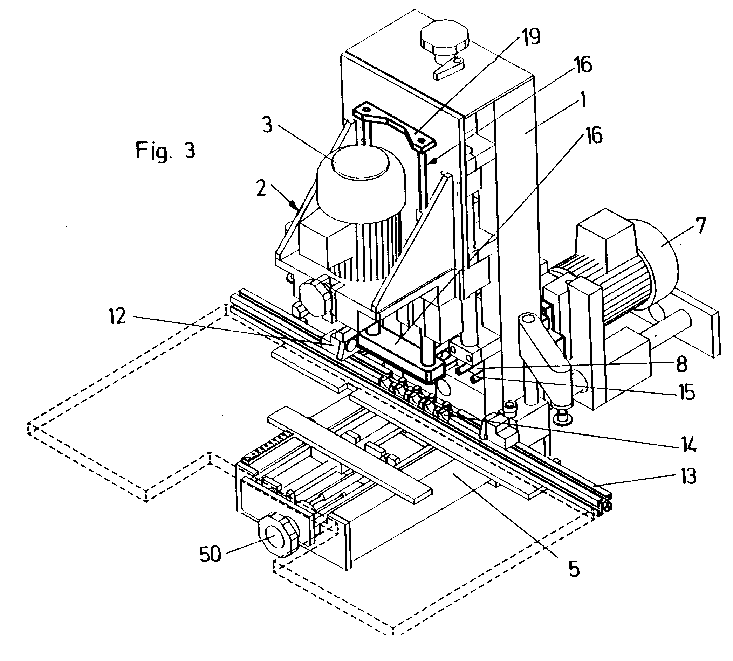

Die Fig. 3 zeigt die Bohrmaschine für stirnseitiges Bohren gerüstet. Das Anschlaglineal 13 hat Ausnehmungen 14, durch die die Bohrer 15 des Mehrspindelbohrkopfes 8 ragen können. Der Mehrspindelbohrkopf 4 am Vorschubrahmen 2 ist entfernt, dafür ist der Niederhalter 16 ausgefahren. Der Niederhalter 16 ist in den Fig. 8 und 9 gezeigt. Er weist einen Druckbalken 17 auf und zwei Säulen 18, die oben über einen Verbindungssteg 46 verbunden sind. Die Säulen 18 weisen Einkerbungen 19 auf und der ganze Niederhalter 16 lagert in Führungen 20 des Vorschubrahmens 2.

Federn 21 drücken den Niederhalter 16 nach oben. Soll der Niederhalter 16 in die Arbeitsstellung gebracht werden, so wird er, wie in der Fig. 9 gezeigt, gegen den Druck der Federn 21 nach unten gedrückt, bis ein Arretierungsblech 22 in den Kerben 19 einrasten kann. Anschließend kann der Vorschubrahmen 2 beispielsweise pneumatisch mit dem Niederhalter 16 zum Werkstück 6 bewegt werden.

Die Fig. 5 zeigt das Einhängen des Mehrspindelbohrkopfes 4. Der Mehrspindelbohrkopf 4 kann, was äußerst vorteilhaft ist, von vorne horizontal in Führungsschienen 23 eingeschoben werden, wobei der Mehrspindelbohrkopf 4 an seiner Oberseite 2 Halteschienen 24 aufweist. Die Führungsschienen 23 bieten eine Führung mit Spiel, sodaß das Einschieben des Mehrspindelbohrkopfes 4 leicht von statten geht.

Am Mehrspindelbohrkopf ist ein Positionierungszapfen 25 angeordnet, der senkrecht nach oben steht. Der Vorschubrahmen 2 trägt auf seiner unteren Tragplatte 26 ein Positionierungsplättchen 27, das einen V-förmigen Schlitz 28 aufweist. In diesen Schlitz 28 wird der Positionierungszapfen 25 beim Einschieben des Mehrspindelbohrkopfes 4 eingeschoben, wodurch der Mehrspindelbohrkoof 4 seitlich positioniert wird.

Befindet sich der Mehrspindelbohrkopf 4 in seiner hintersten Stellung, schlägt er an zwei Haken 29, die den Rand 30 des Mehrspindelbohrkopfes 4 untergreifen, an. Ein vorne an der Trägerplatte 26 bewegbar angeordneter Haken 31 wird über ein Betätigungsrad 32 in die in der Fig. 6 gezeigte Stellung gebracht, wobei er am vorderen Halterand 30 des Mehrspindelbohrkopfes 4 angreift. Der Mehrspindelbohrkopf 4 wird dabei exakt an die Trägerplatte 26 geklemmt.

Die Abtriebswelle 33 des Antriebsmotors 3 trägt im Ausführungsbeispiel nach den Fig. 5, 6, 10 und 11 einen außermittigen Antriebszapfen 34, der in einer Kreisbahn bewegt wird und dabei einen Mitnehmerzapfen 35 des Bohrgetriebes mitnimmt, wodurch die Bohrspindeln 52 angetrieben werden.

Im Ausführungsbeispiel nach den Fig. 5 und 6 ist am Mehrspindelbohrkopf 4 ein Einpreßstempel 36 für das Eindrücken eines Möbelbeschlages, beispielsweise eines Scharniertopfes schwenkbar gelagert. In den Figuren der Zeichnung befindet sich der Einpreßstempel 36 in der Bohrstellung. Nach erfolgter Bohrung wird der Einpreßstempel 36 nach unten vor die Bohrer 9, 10 geschwenkt, worauf das Einpressen erfolgen kann.

Damit das Umschwenken des Einpreßstempels 36 erfolgen kann, benötigt die Bohrmaschine einen relativ hohen Hub, der dann zu einem unangenehmen Zeitverlust führen würde, wenn nur gebohrt werden sollte. Der Bohrhub kann daher sowohl nach oben als auch nach unten eingestellt werden. Die Einstellung nach unten richtet sich selbstverständlich nach der Tiefe der Bohrlöcher, die gewünscht werden. Der Bohrhub nach oben hängt unter anderem davon ab, ob ein Mehrspindelbohrkopf 4 mit Einpreßstempel 36 oder nicht verwendet wird.

Die Bohrmaschine ist daher, wie in den Fig. 14 bis 23 gezeigt, mit einem Anschlagklotz 37 versehen, der um eine vertikale Achse schwenkbar ist. Der Anschlagklotz 37 lagert in einem Bügel 38 und wird von einer Feder 39, die von einem Zapfen 40 gehalten ist, beaufschlagt. Die Trägerplatte 26 weist zwei Schlitze 41 auf, wobei in der außer-Eingriffstellung des Anschlagklotzes 37 dieser durch einen der Schlitze 41 ragt, wenn die Anschlagplatte 26 nach oben bewegt wird.

Der Bügel 38 lagert auf einer Welle 42, die am oberen Ende einen Handgriff 43 trägt.

Soll der Anschlagklotz in die in-Eingriffstellung gebracht werden, d. h. den Hub der Bohrer nach oben begrenzen, so wird der Bügel 38 über den Handgriff 43 und die Welle 42 verschwenkt und zwar aus der in den Fig. 16 und 17 dargestellten Stellung in die in der Fig. 18 und 19 gezeigte Lage. Der Anschlagklotz 37 kann jedoch der Umschaltung noch nicht folgen und liegt seitlich an der Trägerplatte 26 an. Erst beim nächsten Bohrhub, wenn die Trägerplatte 26 nach unten bewegt wird, kommt der Anschlagklotz 37 in die in den Fig. 20 und 21 und 15 gezeigte in-Eingriffstellung, d. h. die Trägerplatte 26 liegt beim Hochfahren nach dem Bohren am Anschlagklotz 37 an.

Soll die Bohrmaschine wiederum auf langem Hub umgestellt werden, wird der Bügel, wie in der Fig. 23 gezeigt, geschwenkt, wobei der Anschlagklotz 37 dieser Bewegung wiederum nicht unmittelbar folgen kann, weil er durch die Klemmwirkung der nach oben drückenden Trägerplatte 26 gehalten ist. Beim nächsten Bohrhub, wenn die Trägerplatte 26 nach unten bewegt wird. nimmt jedoch der Anschlagklotz 37 in die in den Fig. 16 und 17 gezeigte Stellung ein.

Die Fig. 12 und 13 zeigen schematisch weitere Kupplungsmöglichkeiten zwischen der Abtriebswelle 33 des Antriebsmotors 3 und dem Bohrgetriebe, wobei die Fig. 12 eine elektromagnetische Kupplung 44 zeigt und die Fig. 13 ein Zahnrad 45 mit stirnseitiger, keilförmiger Verzahnung. Ein derartiges Zahnrad 45 ist sowohl an der Abtriebswelle 3 des Antriebsmotors 3 als auch an der Antriebswelle des Bohrgetriebes des Mehrspindelbohrkopfes 4 gelagert. Der Höhenabstand zwischen den Schienen 24 und der Trägerplatte 26 ist so groß, daß der Mehrspindelbohrkopf 4 mit einem Zahnrad 45 in die Schienen 24 eingeschoben werden kann. Erst wenn der Mehrspindelbohrkopf 4 mit dem Haken 31 verspannt wird, werden die Zahnräder 45 in Eingriff gebracht.

Die Fig. 7 zeigt die Verankerung des Anschlaglineales 13. Diese Halterungen, von denen zwei oder mehrere an der Maschine gelagert sind, weisen vertikal verschiebbare Klötze 46 auf, die auf Verstellspindeln 47 od. dgl. gelagert sind. Diese Klötze tragen Halteplättchen 48, die in Nuten 49 der Anschlaglineale eingreifen und das Anschlaglineal 13 sowohl nach unten als auch nach hinten, d. h. zum Tischrahmen drücken. Das Anschlaglineal 13 wird dadurch sicher an der Bohrmaschine gehalten. Die Anschlaglineale 13 weisen mindestens einen, vorzugsweise mehrere Positionierungszapfen auf, die nach unten ragen und in korrespondierende Bohrungen des Tischrahmens einrasten, wodurch die Anschlaglineale seitlich positioniert sind.

Am Maschinenrahmen ist weiters ein Revolveranschlag 50 für den Tiefenanschlag angeordnet, der verschieden lange Anschlagstifte 51 trägt. Die Länge der Anschlagstifte 51 entspricht dabei den Abständen x von der Bohrermuffe zum Anschlaglineal 13, die am häufigsten vorkommen.

## Patentansprüche

1. Bohrmaschine zum Bohren von Löchern in Möbelteile, insbesondere zum Bohren der Befestigungslöcher für Möbelbeschläge, beispielsweise Scharniere mit einem Antriebsmotor, der über einen austauschbaren Mehrspindelbohrkopf mit Bohrergetriebe und mehreren Bohrspindeln mehrere Bohrer antreibt, und einem Anschlaglineal mit verstellbaren Anschlagklötzen, sowie einer Vorschubeinrichtung für den Bohrvorschub, einem Tischrahmen und gegebenenfalls einem Einpreßstempel zum Montieren der Möbelbeschläge an einem Möbelteil, gekennzeichnet durch mehrere austauschbare Mehrspindelbohrköpfe (4) die sich gleichzeitig in der Arbeitsstellung befinden und einen korrespondierenden Satz austauschbarer Anschlaglineale (13), die mittels vorzugsweise werkzeuglos betätigbarer Schnellspanneinrichtungen an der Bohrmaschine auswechselbar fixierbar sind.

2. Bohrmaschine nach Anspruch 1, dadurch gekennzeichnet, daß an mindestens einem Mehrspindelbohrkopf (4) in an sich bekannter Weise ein Einpreßstempel (36) schwenkbar lagert.

3. Bohrmaschine nach Anspruch 1, dadurch gekennzeichnet, daß die Anschlaglineale (13) mit mindestens einem Positionierungszapfen versehen sind, der nach unten ragt und zu einer korrespondierenden Bohrung des Tischrahmens einrastet.

4. Bohrmaschine nach Anspruch 1 oder 3, dadurch gekennzeichnet, daß die Schnellspanneinrichtungen für die Anschlaglineale (13) vertikal verschiebbare Klötze (46) umfassen, die seitlich schräg nach unten vorstehende Halteplatten (48) aufweisen, die an Kanten der Anschlaglineale (13) angreifen und diese schräg beaufschlagen.

5. Bohrmaschine nach Anspruch 1, dadurch gekennzeichnet, daß mindestens ein Teil der Mehrspindelbohrköpfe (4) eine separate Antriebswelle aufweist, die sich neben der oder den Bohrspindeln (52) befindet.

6. Bohrmaschine nach Anspruch 1, dadurch gekennzeichnet, daß die Antriebswelle zu zwei benachbarten Bohrspindeln (52) gleichen Abstand hat.

7. Bohrmaschine nach Anspruch 1, dadurch gekennzeichnet, daß ein Niederhalter (16) vorgesehen ist, der das Werkstück (6) während des stirnseitigen Bohrens hält und der vom Pneumatik- oder Hydraulikzylinder des Bohrvorschubes für flachseitiges Bohren beaufschlagt wird.

8. Bohrmaschine nach mindestens einem der Ansprüche 1 bis 6, gekennzeichnet durch an sich bekannte horizontale Halte- und Führungsschienen (23), in die die Mehrspindelbohrköpfe (4) von vorne einschiebbar sind, wobei an den Mehrspindelbohrköpfen (4) ein vertikaler Positionierungszapfen (25) ausgebildet ist, der in eine im Bereich der Führungsschienen (23) angeordnete Führungsplatte (27) mit V-förmiger Positionierungsnut oder Positionierungsschlitz (28) einschiebbar ist.

9. Bohrmaschine nach Anspruch 8, gekennzeichnet durch mindestens einen bewegbaren Haken (31), mit dem ein in die Führungsschienen (23) eingeschobener Mehrspindelbohrkopf (4) an der Bohrmaschine fixierbar ist.

10. Bohrmaschine nach Anspruch 9, dadurch gekennzeichnet, daß drei Haken (29, 31) vorgesehen sind, die in den Eckpunkten eines Dreiecks angeordnet sind, wobei Zwei Haken (29) an der Bohrmaschine starr montiert sind.

11. Bohrmaschine nach einem der Ansprüche 1 bis 10, dadurch gekennzeichnet, daß die Abtriebswelle (33) des Antriebsmotors (3) einen exzentrisch angeordneten Antriebszapfen (34) trägt, der einen ebenso exzentrisch angeordneten Mitnehmerzapfen (35) des Bohrgetriebes auf einer Kreisbahn mitnimmt.

12. Bohrmaschine nach einem der Ansprüche 1 bis 10, dadurch gekennzeichnet, daß zwischen dem Antriebsmotor (3) und dem Bohrergetriebe eines Mehrspindelbohrkopfes (4) eine Elektromagnetkupplung (44) vorgesehen ist.

13. Bohrmaschine nach einem der Ansprüche 1 bis 10, dadurch gekennzeichnet, daß sowohl die Abtriebswelle (33) des Antriebsmotors (3) als auch die Antriebswelle des Bohrgetriebes ein Kupplungsrad (45) mit stirnseitiger Verzahnung aufweisen, die ineinander eingreifen.

14. Bohrmaschine nach Anspruch 1 oder 2, gekennzeichnet durch einen Wegbegrenzer für den Bohrvorschub, der einen federbeaufschlagten um eine vertikale Achse drehbaren Anschlagklotz (37) umfaßt.

15. Bohrmaschine nach Anspruch 13, dadurch gekennzeichnet, daß der Anschlagklotz (37) in der Arretierstellung an einer mit dem Antriebsmotor (3) verbundenen Platte (26) anschlägt, die mindestens einen Schlitz (41) aufweist, in bzw. durch den der Anschlagklotz (37) in der Freistellung führbar ist.

16. Bohrmaschine nach Anspruch 15, dadurch gekennzeichnet, daß der Anschlagklotz (37) in einem Bügel (38) lagert, an dessen Mittelsteg sich die Feder (39) abstützt und der über eine vertikale Welle (42), deren Ende einen Handgriff (43) aufweist, schwenkbar ist.

## Claims

1. Drilling machine for drilling holes in furniture parts, in particular for drilling the securing holes for furniture fittings, for example hinges, having a drive motor which drives drills by way of a replaceable multispindle drilling head with a drill gearing and a plurality of drilling spindles, and a stop rule with adjustable stop blocks, and a feed device for the drill feed, a table frame and if appropriate a press-in die for mounting the furniture fittings on a furniture part, characterized by a plurality of replaceable multispindle drilling heads (4), which are in the working position at the same time, and a corresponding set of replaceable stop rules (13) which can be fixed exchangeably to the drilling machine by means of quick-action clamping devices which can be operated preferably without the use of a tool.

2. Drilling machine according to Claim 1, characterized in that a press-in die (36) is pivotally mounted in a manner known per se on at least one multispindle drilling head (4).

3. Drilling machine according to Claim 1, characterized in that the stop rules (13) are provided with at least one positioning pin which projects downwards and latches into a corresponding bore in the table frame.

4. Drilling machine according to Claim 1 or 3, characterized in that the quick-action clamping devices for the stop rules (13) comprise vertically displaceable blocks (46) which have holding plates (48) which project laterally obliquely downwards and which engage edges of the stop rules (13) and act upon them obliquely.

5. Drilling machine according to Claim 1, characterized in that at least some of the multispindle drilling heads (4) have a separate drive shaft which is located next to the drilling spindle or spindles (52).

6. Drilling machine according to Claim 1, characterized in that the drive shaft has the same clearance from two adjacent drilling spindles (52).

7. Drilling machine according to Claim 1, characterized in that there is provided a hold-down member (16) which holds the workpiece (6) during end-side drilling and which is acted upon by the pneumatic or hydraulic cylinder of the drill feed for flat-side drilling.

8. Drilling machine according to at least one of Claims 1 to 6, characterized by horizontal holding and guide rails (23) which are known per se and into which the multispindle drilling heads (4) can be inserted from the front, there being constructed on the multispindle drilling heads (4) a vertical positioning pin (25) which can be inserted into a guide plate (27) which is arranged in the region of the guide rails (23) and has a V-shaped positioning groove or positioning slot (28).

9. Drilling machine according to Claim 8, characterized by at least one movable hook (31) by means of which a multispindle drilling head (4) inserted into the guide rails (23) can be fixed to the drilling machine.

10. Drilling machine according to Claim 9, characterized in that there are provided three hooks (29, 31) which are arranged at the corner points of a triangle, two hooks (29) being rigidly mounted on the drilling machine.

11. Drilling machine according to one of Claims 1 to 10, characterized in that the output shaft (33) of the drive motor (3) carries an eccentrically arranged drive pin (34) which entrains a similarly eccentrically arranged entrainer pin (35) of the drill gearing on a circular path.

12. Drilling machine according to one of Claims 1 to 10, characterized in that an electromagnetic coupling (44) is provided between the drive motor (3) and the drill gearing of a multispindle drilling head (4).

13. Drilling machine according to one of Claims 1 to 10, characterized in that both the output shaft (33) of the drive motor (3) and the drive shaft of the drill gearing have a coupling wheel (45) with an end-side toothing which mesh with one another.

14. Drilling machine according to Claim 1 or 2, characterized by a path delimiter for the drill feed, which comprises a spring-loaded stop block (37) which is rotatable about a vertical axis.

15. Drilling machine according to Claim 13, characterized in that in the locking position the stop block (37) abuts against a plate (26) which is connected to the drive motor (3) and which has at least one slot (41) into or through which the stop block (37) can be guided in the released position.

16. Drilling machine according to Claim 15, characterized in that the stop block (37) is mounted in a U-clamp (38), on the central web of which the spring (39) is supported and which can be pivoted by way of a vertical shaft (42) whereof the end has a handle (43).

## Revendications

1. Perceuse destinée au perçage de trous dans des éléments de meubles, notamment pour le perçage de trous de fixation pour des fournitures pour meubles, par exemple des charnières, comportant un moteur de commande, qui entraîne plusieurs forets par l'intermédiaire d'une tête multibroche échangeable à engrenages de foret et à plusieurs broches de perçage, et une barre d'arrêt à blocs de butée mobiles, ainsi qu'un dispositif d'avance pour l'avance de perçage, un bâti formant table et, le cas échéant, un poinçon d'insertion pour le montage des fournitures pour meubles sur un élément de meuble, caractérisée par plusieurs têtes multibroches (4) échangeables, qui se trouvent en même temps en position de travail, et par un ensemble correspondant de barres d'arrêt (13) échangeables, qui peuvent être fixées sur perceuse, de manière amovible, au moyen de dispositifs à serrage rapide, actionnables de préférence sans nécessiter d'outil.

2. Perceuse selon la revendication 1, caractérisée en ce qu'un poinçon d'insertion (36) est monté de façon à pouvoir pivoter, d'une manière connue en soi, sur au moins une tête multibroche (4).

3. Perceuse selon la revendication 1, caractérisée en ce que les barres d'arrêt (13) sont munies d'au moins une broche de positionnement, qui fait saillie vers le bas et qui pénètre dans un trou correspondant du bâti formant table.

4. Perceuse selon la revendication 1 ou 3, caractérisée en ce que les dispositifs à serrage rapide pour les barres d'arrêt (13) comportent des blocs (46) verticalement déplaçables, qui présentent des plaques de retenue (48) faisant saillie obliquement latéralement vers le bas et qui viennent en prise contre des bords des barres d'arrêt (13) pour les solliciter obliquement.

5. Perceuse selon la revendication 1, caractérisée en ce qu'au moins une partie des têtes multibroches (4) présente un arbre de commande séparé, qui se trouve à côté de la ou des broche(s) de perçage (52).

6. Perceuse selon la revendication 1, caractérisée en ce que l'arbre de commande présente le même écartement par rapport à deux broches de perçage (52) voisines.

7. Perceuse selon la revendication 1, caractérisée en ce qu'on prévoit un serre-pièce (16), qui maintient la pièce à usiner (6) pendant le perçage du côté frontal et qui est sollicité par le vérin pneumatique ou hydraulique de l'avance de perçage, pour un perçage à plat.

8. Perceuse selon au moins l'une des revendications 1 à 6, caractérisée par des rails horizontaux de retenue et de guidage (23) connus en soi, dans lesquels les têtes multibroches (4) peuvent être introduites depuis l'avant, tandis qu'une broche de positionnement (25) verticale est formée sur les têtes multibroches (4) et qu'elle peut être introduite dans une plaque de guidage (27), disposée dans la zone des rails de guidage (23) et comportant une rainure de positionnement ou une fente de positionnement (28) en forme de V.

9. Perceuse selon la revendication 8, caractérisée par au moins un crochet mobile (31) permettant de fixer, sur la perceuse, une tête multibroche (4) introduite dans les rails de guidage (23).

10. Perceuse selon la revendication 9, caractérisée en ce qu'on prévoit trois crochets (29, 31), qui sont disposés dans les angles d'un triangle, deux crochets (29) étant montés rigidement sur la perceuse.

11. Perceuse selon l'une des revendications 1 à 10, caractérisée en ce que l'arbre de commande (33) du moteur de commande (3) porte un tourillon de commande (34) disposé de manière excentrée, qui entraîne un tourillon d'entraînement (35), disposé également de manière excentrée, de l'engrenage de perçage sur une trajectoire circulaire.

12. Perceuse selon l'une des revendications 1 à 10, caractérisée en ce qu'on prévoit, entre le moteur de commande (3) et l'engrenage de perçage d'une tête multibroche (4), un accouplement électromagnétique (44).

13. Perceuse selon l'une des revendications 1 à 10, caractérisée en ce qu'aussi bien l'arbre de commande (33) du moteur de commande (3) que l'arbre de commande de l'engrenage de perçage présentent une roue d'accouplement (45) à denture de bout, ces dentures s'engrenant.

14. Perceuse selon la revendication 1 ou 2, caractérisée par un limiteur de course pour l'avance de perçage, qui comprend un bloc de butée (37) sollicité par ressort et propre à tourner autour d'un axe vertical.

15. Perceuse selon la revendication 13, caractérisée en ce que le bloc de butée (37) bute, dans la position d'arrêt, contre une plaque (26) reliée au moteur de commande (3) et présentant au moins une fente (41) dans ou à travers laquelle le bloc de butée (37) peut être guidé, dans la position libre.

16. Perceuse selon la revendication 15, caractérisée en ce que le bloc de butée (37) est logé dans un étrier (38), sur la barrette médiane duquel s'appuie le ressort (39), et qui peut être amené à pivoter par l'intermédiaire d'un arbre vertical (42), dont l'extrémité présente une manette (43).
